# FASCICULE DE BREVET EUROPEEN

(11) **EP 1 114 377 B1**
(45) Date de publication et mention de la délivrance du brevet: **10.11.2004**
(21) Numéro de dépôt: 98941211.9
(22) Date de dépôt: 15.09.1998
(51) Int. Cl.: G06F 17/40

(54) **SYSTEME MODULAIRE D'ACQUISITION DE DONNEES**
MODULARES DATENERFASSUNGSSYSTEM
MODULAR DATA COLLECTION SYSTEM

(43) Date de publication de la demande: 11.07.2001
(73) Titulaire: Acqiris, 1228 Plan-les-Ouates (CH)
(72) Inventeur: VITTET, Jean-Pierre, CH-1233 Lully (CH); GOUMAZ, Jean-François, CH-1208 Genève (CH); BOLLI, Jean-Luc, CH-1209 Genève (CH); MAUMARY, Yves, CH-1201 Genève (CH); LAVANCHY, Didier, CH-1400 Cheseaux-Noreaz (CH); HUNGERBÜHLER, Viktor, CH-1242 Satigny (CH)
(74) Mandataire: Saam, Christophe
(86) Numéro de dépôt international: PCT/CH1998/000395
(87) Numéro de publication internationale: WO 2000/016223

(56) Documents cités:
- EP-A- 0 696 005
- WO-A-97/49025
- DE-A- 3 743 847
- US-A- 5 645 434

## Description

La présente invention concerne un système modulaire d'acquisition de données. La présente invention concerne plus particulièrement la synchronisation de différents modules dans un système modulaire d'acquisition.

On connaît de nombreux types de systèmes d'acquisition de données, par exemple des enregistreurs transitoires et des oscilloscopes numériques, dans lesquels il est nécessaire de convertir un ou plusieurs signaux analogiques en un ou plusieurs signaux numériques aptes à être mémorisés dans une mémoire numérique et traités par un processeur numérique. Depuis quelques années, on a vu également apparaître des systèmes d'acquisitions modulaires, comportant généralement un châssis dans lequel différents modules d'acquisition peuvent être insérés parallèlement dans des alvéoles, généralement désignées par leur appellation anglo-saxonne de slot. Chaque module comporte des moyens de connexion permettant de l'insérer et de le connecter de manière amovible dans le système, ainsi que généralement un ou plusieurs canaux d'acquisition permettant de numériser les signaux d'entrée observés. On connaît par exemple des modules d'acquisition conformes au standard PCl, CompactPCl, VXI ou PXI définissant les caractéristiques mécaniques et électriques des moyens de connexion entre modules.

Ces systèmes d'acquisition modulaires présentent l'avantage de pouvoir être configurés par l'utilisateur en ajoutant ou en remplaçant certains modules, et peuvent ainsi être adaptés aux besoins les plus divers.

Les modules d'acquisition de données disponibles sur le marché comportent généralement deux ou quatre canaux. En raison de la surface limitée à disposition sur les cartes usuelles, il est difficile de prévoir un nombre de canaux nettement supérieur sans devoir renoncer à certaines fonctions utiles ou sans avoir recours à des solutions de mise en oeuvre complexes. Lorsqu'un grand nombre de canaux d'acquisition est nécessaire pour une application donnée, il est donc nécessaire d'insérer plusieurs modules dans le système d'acquisition. Un système à huit canaux d'acquisition peut ainsi par exemple être réalisé par l'utilisateur en enfichant 4 modules d'acquisition à deux canaux chacun dans les slots d'un système d'acquisition modulaire.

Un but de la présente invention est de proposer un module d'acquisition amélioré pour un système d'acquisition modulaire. En particulier, un but de la présente invention est d'améliorer la synchronisation entre canaux d'acquisition sur des modules distincts.

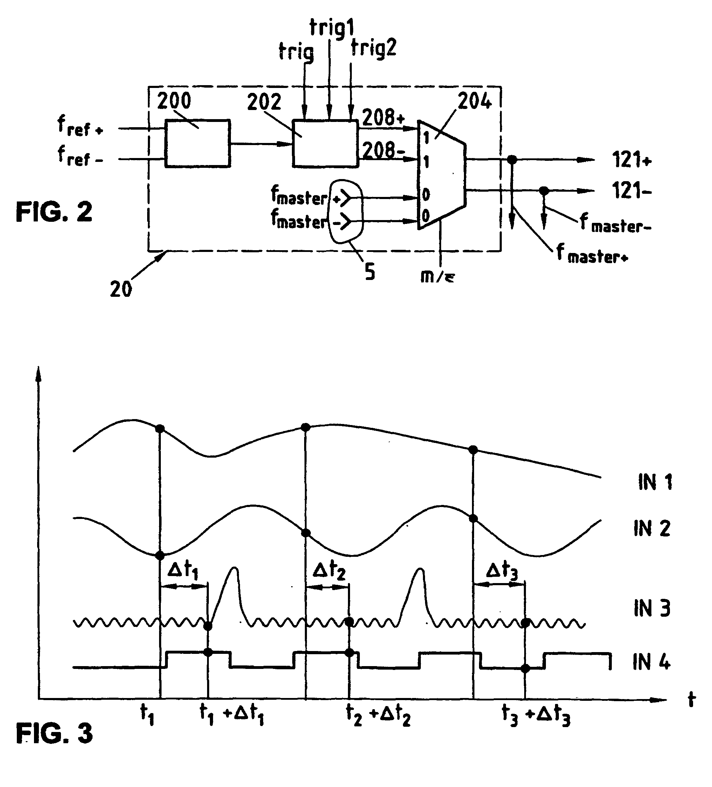

L'invention part de la constatation que, dans des systèmes modulaires d'acquisition de type connu, les instants d'échantillonnage des signaux sur les différents canaux ne sont pas toujours identiques. La figure 3 illustre le cas particulier d'un système d'acquisition comprenant deux modules, le premier module comprenant les deux canaux IN1 et IN2 alors que le deuxième module comprend les canaux IN3 et IN4. Chaque module dispose généralement de son propre circuit de génération de signal d'horloge permettant de synchroniser les numériseurs du module. On constate sur la figure 3 que les deux signaux IN1 et IN2 sur le premier module sont échantillonnés aux mêmes instants d'échantillonnage t₁, t₂ et t₃. De la même façon, les instants d'échantillonnage des deux signaux IN3 et IN4 sur le deuxième module sont également synchronisés entre eux. Toutefois, le signal d'horloge utilisé sur le premier module est différent du signal sur le second module, en sorte qu'il existe un déphasage Δt entre les instants d'échantillonnage sur le premier module et les instants d'échantillonnage sur le second module. Ce déphasage peut en outre varier au cours du temps.

Ce problème est naturellement particulièrement crucial lors d'acquisition de signaux à très haute fréquence, par exemple de l'ordre du gigahertz, devant être comparés entre eux. Un déphasage de quelques nanosecondes peut rendre certaines mesures impossibles ou erronées.

Un autre problème que vise à résoudre l'invention concerne la transmission de signaux de déclenchement, plus communément désignés par l'appellation anglo-saxonne trigger, entre modules. Il est par exemple parfois requis de commencer l'acquisition de données sur un canal déterminé seulement lorsqu'un événement particulier est détecté sur un autre canal, pouvant être implémenté sur un autre module. Les modules d'acquisition de données de l'art antérieur ne permettent généralement pas la synchronisation de canaux sur des signaux de trigger générés sur un autre module.

Le système PXI proposé notamment par National Instruments permet de distribuer un signal de référence à 10MHz entre différents modules dans un système d'instrumentation. Ce signal est distribué par les connecteurs enfichés dans la carte mère du système d'acquisition, sur la face inférieure des modules. Toutefois, cette fréquence de référence standard est insuffisante pour synchroniser entre eux des numériseurs fonctionnant à des vitesses beaucoup plus élevées, de l'ordre du gigahertz par exemple. Il serait possible de multiplier sur chaque module la fréquence du signal de référence, par exemple à l'aide d'une boucle à verrouillage de phase (PLL), et de synchroniser les numériseurs sur chaque module avec le signal ainsi multiplié ; toutefois, les différentes PLL sur les différents modules introduiraient des déphasages différents et difficilement prévisibles, en sorte que même cette solution ne permettrait pas de garantir des instants d'échantillonnage absolument simultanés.

Le système PXI met également à disposition des lignes de trigger sur le fond de panier, utilisant les connecteurs des modules enfichables dans les slots de la carte mère. A nouveau, les caractéristiques telles que temps de propagation ou fréquence maximale des signaux transmis sur ces lignes ne permettent pas de les utiliser pour des applications à très haute fréquence exigeant une précision temporelle élevée. Un bus, généralement dénommé «star trigger bus », offre des performances plus élevées, mais permet uniquement de synchroniser les modules sur des signaux de trigger générés par des modules occupant des slots prédéterminés - par exemple le premier emplacement après le slot contenant le module système. Le star trigger bus n'offre donc pas la flexibilité requise par certaines applications et nécessite de permuter l'emplacement des modules dans les slots du système d'acquisition afin de générer des signaux de trigger à partir d'un canal sur un autre module.

Un but de la présente invention est de proposer un système modulaire d'acquisition de données permettant de synchroniser les modules d'acquisition à partir de n'importe quel module, et de définir des signaux de trigger sur n'importe quel canal, sans devoir permuter les emplacements des modules d'acquisition dans les slots et si possible par programmation logicielle.

Selon l'invention, ces buts sont atteints au moyen des éléments des diverses revendications indépendantes, des variantes préférentielles de l'invention étant par ailleurs indiquées dans les revendications dépendantes.

En particulier, ces buts sont atteints au moyen d'un module pour système modulaire d'acquisition de données, comprenant des moyens de connexion (par exemple de type PCI, CompactPCI, PXI, VXI, ou selon tout autre type adapté) permettant d'insérer le module de manière amovible dans un slot quelconque dudit système d'acquisition modulaire. Le module de l'invention comporte au moins un canal d'acquisition, chaque canal comportant au moins un convertisseur analogique-numérique pour convertir un signal d'entrée analogique en un signal numérique. Chaque convertisseur comporte une entrée d'horloge pour un signal de fréquence d'échantillonnage ; ce signal définit les instants d'échantillonnage du convertisseur.

Selon l'invention, le module comporte en outre au moins un circuit de génération d'horloge apte à fournir un signal d'horloge interne. Un connecteur disposé de préférence sur la face avant du module permet d'enficher un élément de connexion amovible afin de transmettre au moins un signal de synchronisation externe sur un bus reliant des modules adjacents dans ledit système d'acquisition modulaire. Un circuit de sélection d'horloge permet soit de relier ledit signal de synchronisation externe auxdites entrées d'horloge (état d'esclave d'horloge), soit d'imposer sur ledit bus ledit signal d'horloge interne (état de maître d'horloge). De cette manière, selon le signal de sélection maître-esclave appliqué (par exemple par le processeur de contrôle du système d'acquisition), il est possible soit d'utiliser le circuit de génération d'horloge interne du module pour synchroniser les convertisseurs analogiques-numériques, et de fournir un signal de synchronisation externe dérivé de ce signal d'horloge interne aux autres modules du système d'acquisition, soit de synchroniser le convertisseur avec un signal de synchronisation externe généré sur un autre module. Dans une variante, il est également possible de définir quel module génère le signal de synchronisation externe au moyen de commutateurs sur les modules ou sur les éléments de connexion.

Des éléments de connexion permettant de relier des composants électroniques distincts sont décrits dans le brevet US5'645'434 (T. Leung). Le connecteur décrit dans ce document permet de relier des "Hubs" superposés dans un réseau informatique. Ce document ne décrit pas comment des connecteurs pourraient aussi être utilisés pour relier des modules d'acquisition de données, ni de circuit de sélection d'horloge.

WO9749025 décrit un système d'acquisition de données qui comporte des cartes interchangeables connectées par l'arrière à un bus d'un ordinateur par entichement dans un slot. Les cartes présentent sur leur face avant une série de connecteurs. Ce document ne décrit toutefois pas de connecteurs permettant de connecter chaque module à un bus de synchronisation, ni de circuit de sélection d'horloge.

DE3743847 décrit un système d'acquisition de données flexibles composés de plusieurs ordinateurs et de modules d'acquisition reliées aux ordinateurs par un premier bus. Les modules d'acquisition peuvent fonctionner selon leur horloge interne ou selon un signal d'horloge donné par un ordinateur. Ce document ne décrit en revanche pas comment les modules d'acquisition pourraient être reliés directement entre eux de manière à constituer un bus de synchronisation.

Le signal de synchronisation externe transmis entre modules est de préférence un signal directement dérivé du signal généré par le générateur d'horloge interne de l'un des modules, et peut ainsi être appliqué aux convertisseurs analogiques-numériques des autres modules. Un élément de retard programmable permet de compenser les retards de propagation variables du signal de synchronisation externe entre les modules, dû aux distances différentes parcourues par le signal entre les différents modules. On évite cependant de placer un élément introduisant un retard imprévisible entre le bus fournissant le signal de synchronisation externe et les convertisseurs du système d'acquisition. En particulier, on évite dans les modules de l'invention l'utilisation de boucles à verrouillage de phase sur les entrées du signal de synchronisation externe.

Selon l'invention, des signaux de trigger sont également transmis sur un bus entre modules dans le système d'acquisition. Il est possible par programmation de définir quel module (« trigger-master ») fournit un signal de trigger à un moment donné. Dans une variante, il est également possible de définir quel module génère le signal de trigger externe au moyen de commutateurs sur les modules ou sur les éléments de connexion.

Selon l'invention, les signaux d'horloge maître et les signaux de trigger sont transmis entre modules par l'intermédiaire d'éléments de connexion amovibles enfichés sur la face avant des modules d'acquisition. Des configurations de synchronisation ou de trigger différentes peuvent de cette manière être définies simplement par l'utilisateur, simplement en ajoutant ou en retirant des éléments de connexion.

Le document de brevet EP0318768, auquel il est fait référence, décrit un analyseur logique comprenant plusieurs modules.

Chaque module comporte un échantillonneur pouvant être synchronisé soit par un signal d'horloge externe provenant de l'appareil testé, soit par un signal d'horloge généré par un générateur de signal d'horloge commun à tous les modules. Un multiplexeur sur chaque module permet de sélectionner un des deux signaux d'horloge. Les modules ne comportent toutefois pas de circuit de génération d'horloge interne. Ce document ne suggère pas de transmettre des signaux d'horloge entre modules au moyen d'éléments de connexion eux-mêmes amovibles.

US4490821 décrit un système pour compenser les retards dus à la propagation de signaux d'horloge entre modules distants dans un ordinateur de grande dimension. Ce document ne concerne toutefois pas la technique de l'acquisition de données.

L'invention sera mieux comprise à l'aide de la description donnée à titre d'exemple et illustrée par les figures qui montrent :
La figure 1 un schéma bloc de deux modules d'acquisition selon l'invention reliés par un élément de connexion selon l'invention.
La figure 2 un schéma bloc d'un circuit de génération d'horloge et de sélection d'horloge selon l'invention.
La figure 3 un diagramme temporel illustrant le problème du déphasage entre instants d'échantillonnage de canaux sur des modules différents dans les systèmes d'acquisition de l'art antérieur.
La figure 4 une représentation schématique de la connexion du signal de l'horloge d'échantillonnage.
La figure 5 une représentation schématique de la connexion de signaux de synchronisation entre modules adjacents au moyen du bus de l'invention.
La figure 6 une représentation en perspective d'un système d'acquisition comprenant plusieurs modules selon l'invention.
La figure 7 une représentation en perspective d'un élément de connexion selon l'invention, illustré sans son boîtier synthétique.
La figure 8 une représentation en perspective d'un élément de connexion selon l'invention, muni d'un boîtier synthétique.

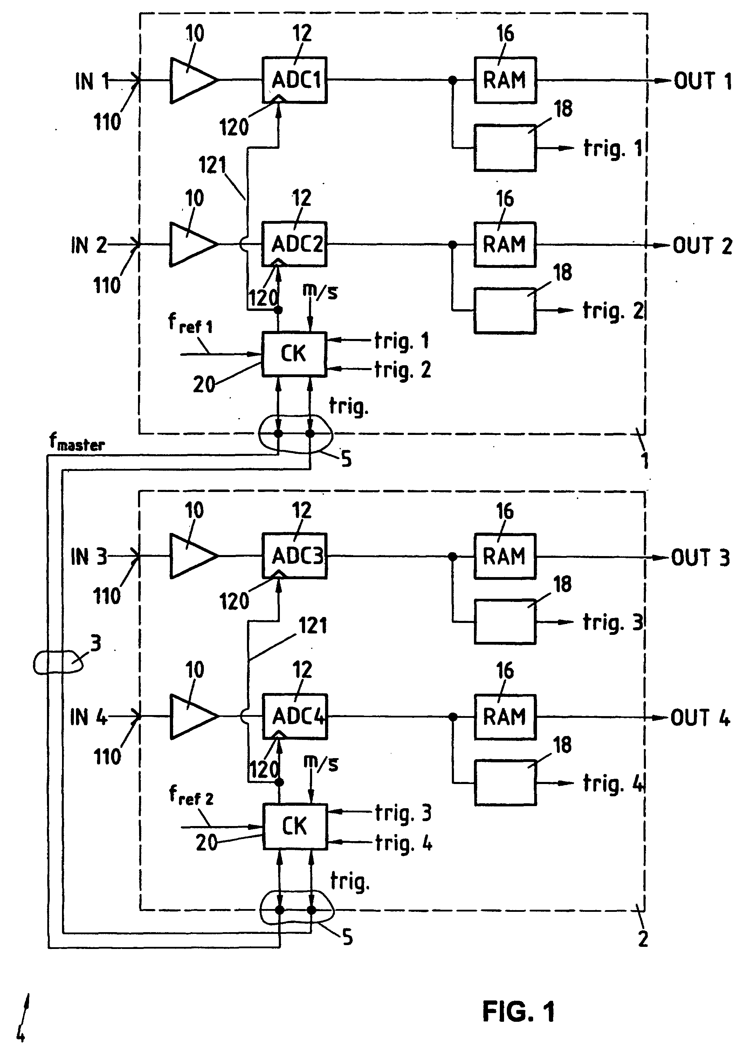

La figure 1 illustre un schéma bloc simplifié dans un souci de clarification de deux modules d'acquisition 1, 2 à deux canaux reliés par un élément de connexion selon l'invention. Seuls les éléments nécessaires à la compréhension rapide de l'invention ont été illustrés sur la figure 1 ; les connexions entre les différents éléments des modules ont été représentées sous la forme d'une simple ligne, même dans le cas où cette connexion peut correspondre à un bus ou à des lignes différentielles.

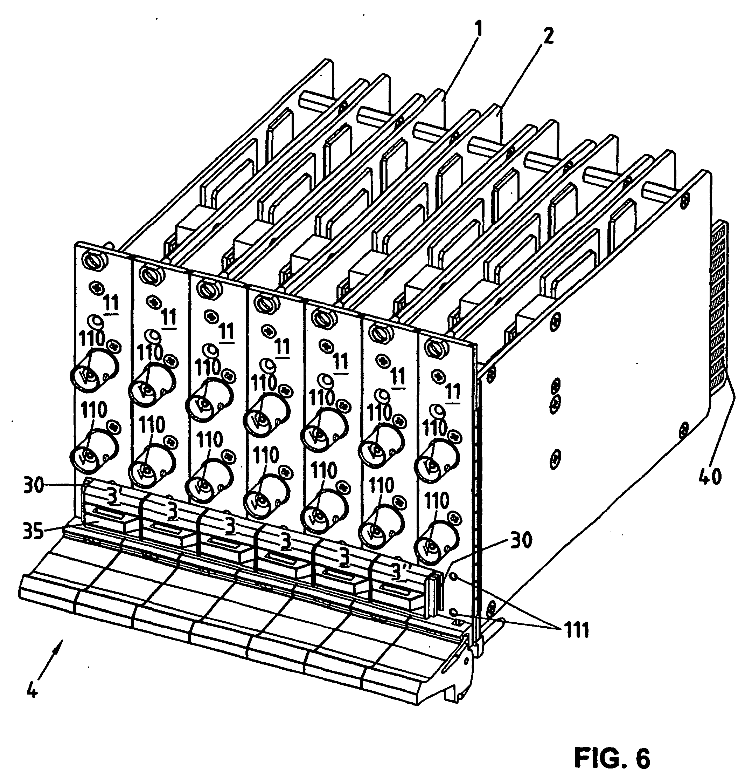

L'homme du métier comprendra que l'invention s'applique à un système d'acquisition comprenant n'importe quel nombre de modules 1,2 comprenant chacun n'importe quel nombre de canaux d'acquisition. La figure 6 illustre par exemple en perspective un système d'acquisition à 14 canaux, constitué de sept modules d'acquisition à deux canaux chacun. Chaque module d'acquisition 1, 2 comporte des moyens de connexion 40 permettant de l'enficher et de le connecter dans un slot (non représenté) prévu sur la carte mère (non représentée) du système d'acquisition. Dans le cas d'une carte de type PXI standard, la carte mère comporte généralement huit slots parallèles. Le nombre et la disposition des slots peuvent toutefois être variables selon l'application et la technologie (par exemple PCI, CompactPCI, PXI, VXI, etc..) utilisées ; il est également possible de construire des systèmes avec un nombre de modules encore plus grand en utilisant des ponts entre deux cartes mères (par exemple, dans un système PCI, au moyen de la technologie dite « PCI-to-PCI bridge ») ou en plaçant des modules d'acquisition dans plusieurs paniers mutuellement connectés. Un système de traitement numérique non représenté, situé par exemple sur la carte mère ou également monté dans une carte d'extension dans un slot, permet de contrôler les différents modules d'acquisition, de traiter les données échantillonnées et de les mémoriser ou de les afficher sur un affichage non représenté. Le système de traitement numérique est de préférence constitué par un ordinateur personnel contrôlé par exemple par le système d'exploitation Windows, DOS, UNIX ou LINUX ou par tout autre système d'exploitation approprié.

Chaque canal d'acquisition sur chacun des modules comporte un connecteur 110, par exemple un connecteur BNC, permettant de raccorder un câble de connexion pour le signal analogique à mesurer. Le signal est amplifié et éventuellement filtré par un étage d'amplification 10, puis converti en un signal numérique par un convertisseur analogique-numérique 12 (numériseur) et mémorisé dans une mémoire vive 16, par exemple une mémoire à double accès, accessible en lecture par le système de traitement numérique évoqué.

On réalise actuellement des numériseurs 12 qui travaillent avec une fréquence d'échantillonnage supérieure à 500 MHz, par exemple de l'ordre de 1GHz ou plus ; il est à prévoir que ces limites actuelles vont être dépassées avec l'apparition de composants plus performants. Ces numériseurs ultrarapides fournissent un mot numérique, par exemple un octet dans le cas de convertisseurs à huit bits, à chaque flanc d'un signal d'échantillonnage 121 fourni sur une entrée d'horloge 120, par exemple chaque nanoseconde.

Les modules 1, 2 peuvent comporter un circuit de génération de signal de trigger 18 associé à chaque canal pour observer le signal numérique fourni par le numériseur 12 et fournir au moins un signal de trigger (trig1, trig2, trig3, trig4) à l'occurrence d'un événement particulier sur ce signal - par exemple, lors d'un passage du signal par zéro ou par un extremum. Les circuits 18 peuvent de préférence être contrôlés par le système de traitement numérique évoqué afin de contrôler différents types d'événement sur chaque canal. Le signal de trigger fourni peut être utilisé pour modifier le fonctionnement d'un ou plusieurs des canaux d'acquisition - par exemple, pour stopper l'acquisition de données afin de visualiser les données acquises juste avant l'occurrence de l'événement détecté, pour commencer une nouvelle acquisition de données ou pour modifier l'ordre de mémorisation des données numérisées dans la mémoire RAM 16. Le circuit de génération de trigger accède directement aux données à la sortie du numériseur 12. Il est aussi possible de réaliser un module dans lequel des signaux de trigger sont fournis par les amplificateurs 10, à l'aide de comparateurs transformant le signal analogique en un signal numérique en fonction d'un seuil de comparaison, ou un circuit de trigger fournissant un signal en réponse à un événement détecté par le système de traitement numérique par exemple. Il est aussi possible de prévoir des modules 1, 2 dans lesquels au moins certains canaux sont dépourvus de circuit de génération de trigger, ou des modules, pouvant aussi être montés dans un autre panier d'instruments, effectuant uniquement la génération de trigger sur certains canaux, et donc dépourvus de mémoire RAM 16 sur certains canaux. Enfin, des circuits de trigger plus complexes, détectant des événements simultanés sur plusieurs canaux (par exemple une valeur du signal sur un premier canal égale à la valeur du signal sur un deuxième canal), peuvent également être prévus.

Chaque module comporte un circuit de génération d'horloge 20, apte à fournir un signal d'horloge interne 208 (figure 2) au module. Le circuit de génération d'horloge reçoit de préférence un signal de référence f_{ref} généré par exemple par un oscillateur à quartz dans le module, ou fourni de l'extérieur du module, par exemple par la carte mère, par le dispositif mesuré ou par une horloge de haute précision pouvant être montée sur une carte dans un autre slot du système d'acquisition ou dans un autre panier d'instruments. Le circuit de génération d'horloge 20 reçoit en outre un signal de synchronisation externe fₘₐₛₜₑᵣ fourni par le bus de synchronisation selon l'invention, ainsi que des signaux de trigger internes et externes pouvant influencer le fonctionnement du circuit de génération d'horloge. Sur chaque module, le circuit 20 génère un signal d'horloge interne 208 pouvant être utilisé comme signal d'échantillonnage 121 pour l'échantillonnage des données dans les numériseurs 12. Le signal d'horloge 208 est de préférence un signal différentiel ; il peut aussi être constitué par deux signaux, par exemple deux signaux déphasés de 90 degrés dont aussi bien les flancs montants que les flancs descendants peuvent être utilisés pour l'échantillonnage. Comme illustré sur la figure 3, les instants d'échantillonnage t₁, t₂, t₃ des signaux sur des canaux IN1-IN2 (ou IN3-IN4) sur le même module sont ainsi synchronisés. En revanche, dans les systèmes de l'art antérieur, il n'est pas possible de synchroniser les instants d'échantillonnage entre canaux sur des modules différents.

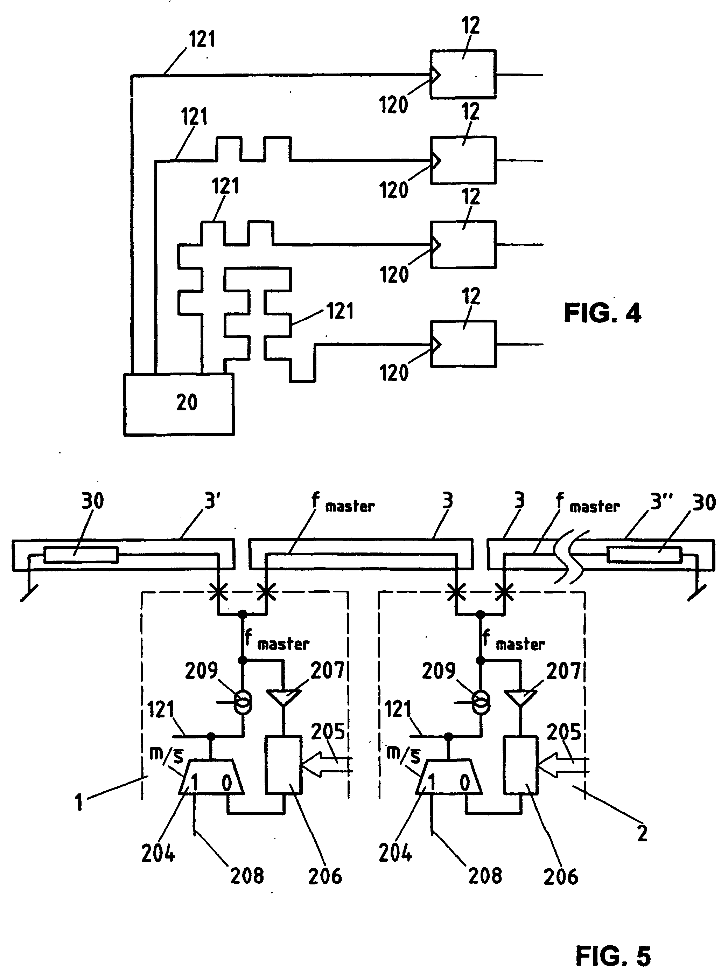

Selon l'invention, les modules d'acquisition 1, 2 sont munis d'un connecteur 5 permettant d'enficher un élément de connexion amovible 3 (particulièrement visible sur les figures 5 à 8) afin de relier ces modules à un bus de synchronisation reliant plusieurs modules dans le système. La figure 2 illustre de manière schématique une partie des composants du circuit de génération d'horloge 20. La fréquence de référence fournie par l'oscillateur interne évoqué (non représenté) ou par un oscillateur externe est multipliée par une boucle à verrouillage de phase (PLL) 200, puis transmise à la logique de génération d'horloge 202 dont le fonctionnement ne sera pas détaillé ici. On notera l'utilisation préférentielle de signaux de référence de type différentiel f_{ref+}, f_{ref-}. La logique de génération d'horloge 202 permet de modifier le fonctionnement du circuit de génération de signal d'horloge en fonction de différentes conditions, par exemple en fonction des signaux de trigger trig, trig1, trig2. Par exemple, le signal d'horloge interne 208 peut être interrompu par une commande du système de traitement numérique ou lorsque certaines conditions de trigger sont remplies.

Les signaux d'horloge interne 208+, 208- délivrés par la logique 202 sont transmis à un circuit de sélection différentiel 204. Le signal de synchronisation externe fₘₐₛₜₑᵣ₊, fₘₐₛₜₑᵣ₋ (également de préférence un signal différentiel) est produit à l'autre entrée du circuit de sélection 204, qui fournit à la sortie du circuit de génération d'horloge 20 un signal d'échantillonnage différentiel 121+, 121- permettant de déclencher l'échantillonnage des signaux dans les numériseurs 12. Selon l'invention, un signal master/slave m/s, fourni de préférence par le système de traitement numérique par l'intermédiaire des connexions 40 (figure 6), permet de choisir dans le circuit de sélection 204 soit un état d'esclave-horloge, dans lequel les numériseurs 12 sont synchronisés par le signal de synchronisation externe fₘₐₛₜₑᵣ₊, fₘₐₛₜₑᵣ₋ fourni par ledit bus de synchronisation, soit un état de maître-horloge, dans lequel ces numériseurs sont synchronisés par le signal d'horloge interne 208+, 208-. Dans ce dernier cas, le signal d'horloge interne 208+, 208- est également utilisé comme signal de synchronisation externe sur ledit bus de synchronisation et permet ainsi de synchroniser les numériseurs 12 sur d'autres modules placés en état d'esclave-horloge.

La figure 4 illustre de manière schématique le raccordement entre le circuit de génération d'horloge 20 et les différents convertisseurs analogiques-numériques 12 sur le module, dans le cas d'un module à quatre canaux. Les convertisseurs 12 sont généralement disposés en ligne sur le module, de la manière illustrée schématiquement sur la figure 1. La distance entre le circuit de génération d'horloge 20 et les différents convertisseurs est ainsi nécessairement différente, en sorte que le temps de transmission du signal d'échantillonnage 121 vers les convertisseurs est différent. Dans un système d'acquisition à très haute fréquence, le déphasage ainsi introduit peut être inacceptable. Afin de le compenser, on réalisera de préférence des connexions au moyen de pistes non rectilignes sur le module, de manière à connecter tous les numériseurs 12 au circuit 20 par des pistes de longueur identique.

La figure 5 illustre de manière schématique la connexion de modules adjacents 1, 2 au moyen d'un bus de synchronisation selon l'invention. Le signal de synchronisation externe reçu du bus sur le connecteur 5 est amplifié par un amplificateur 207, puis traverse une ligne à retard digitale 206 programmable au moyen de lignes de programmation 205. Le retard introduit par la ligne à retard 206 peut être ajusté par le système de traitement numérique de façon à compenser les différents retards introduits par la propagation du signal de synchronisation externe sur le bus de synchronisation. Un programme approprié modifie le retard introduit par la ligne à retard 206 en fonction de l'emplacement occupé par le module dans le système d'acquisition, et de la distance au module maître d'horloge générant le signal de synchronisation externe. Lorsque le module maître d'horloge change, il est nécessaire de reprogrammer les retards introduits par les lignes à retard dans les différents modules. Afin d'ajuster plus finement le retard, la ligne à retard numérique 205 peut être complétée ou remplacée par une ligne à retard analogique permettant une compensation de déphasage plus précise. Le signal de synchronisation ainsi retardé est transmis au circuit de sélection 204 et éventuellement sélectionné au moyen du signal m/s pour synchroniser les numériseurs 12 du module.

Dans le cas où le module 1 considéré fonctionne comme maître d'horloge, le signal (différentiel) d'horloge interne 208 sélectionné par le circuit de sélection 204 est de préférence fourni à une source de courant contrôlée 209.

Les différents modules sont connectés deux par deux au moyen d'éléments de connexion 3 aptes à être enfichés dans les connecteurs 5 des modules d'acquisition. Chaque élément de connexion permet de relier un module avec son voisin immédiat dans le système d'acquisition. Le signal (différentiel) de synchronisation externe fₘₐₛₜₑᵣ est ainsi transmis le long d'un bus traversant chaque élément de connexion 3 et chaque module 1, 2 connecté, sans passer directement d'un élément de connexion 3 à son voisin. Les derniers éléments de connexion 3', 3" à chaque extrémité du bus, c'est-à-dire connectés avec les modules occupant les positions externes dans le système d'acquisition modulaire, sont équipés d'une impédance de terminaison 30, de préférence une résistance connectée entre chaque ligne du bus et la terre et dont la valeur correspond à l'impédance de ligne du bus, de préférence 50 ohms.

Bien que les schémas simplifiés des figures 2 à 5 montrent uniquement la transmission du signal de synchronisation externe fₘₐₛₜₑᵣ entre différents modules d'acquisition, au moins un signal de trigger est de préférence également transmis entre les modules par l'intermédiaire des mêmes connecteurs 5 et des mêmes éléments de connexion 3. De la même façon, un circuit de sélection non représenté commandé par le système de traitement numérique permet de choisir sur chaque module entre un signal de trigger externe (transmis sur le bus) ou un signal de trigger généré sur le module, et de déterminer quel canal sur quel module remplit la fonction de maître de trigger. Le choix du canal utilisé pour générer le signal de trigger externe peut ainsi être effectué par programmation, sans qu'il soit nécessaire de déplacer des modules ou des éléments de connexion. Il est également possible de véhiculer plusieurs lignes de trigger par l'intermédiaire des éléments de connexion 3, et de définir par programmation (ou dans une variante également par des commutateurs, sur les modules ou sur les éléments de connexion 3, 3', 3") quel module génère le signal de trigger sur chaque ligne disponible. De préférence, les signaux de trigger sont également des signaux différentiels.

La figure 6 illustre en perspective un système d'acquisition comportant plusieurs modules d'acquisition 1, 2 côte à côte reliés par des éléments de connexion 3, 3', 3" enfichés sur la face avant des modules et permettant de transmettre un signal de synchronisation externe et un ou plusieurs signaux de trigger entre les modules. On voit en particulier sur cette figure la réalisation différente des éléments de connexion 3' et 3" occupant les deux slots d'extrémités ; la forme de ces éléments de connexion, qui contiennent des impédances de terminaison mentionnées, ne permet pas de les insérer au milieu du bus, entre deux autre éléments de connexion 3. Dans les cas d'un système d'acquisition constitué uniquement de deux modules d'acquisition, on utilisera de préférence un élément de connexion comportant pour chaque ligne du bus deux impédances de terminaison et dont la forme ne permet pas de l'insérer dans une position adjacente à un autre élément de terminaison.

Un système d'acquisition peut comporter, outre un ou plusieurs module d'acquisition, des modules remplissant des fonctions différentes. Par exemple, il est possible dans le cadre de cette invention de réaliser un système d'acquisition comportant des modules d'horloge permettant uniquement de fournir un signal de synchronisation externe fₘₐₛₜₑᵣ, et éventuellement un signal de référence f_{ref}, aux autres modules, ou comportant des modules de trigger visant uniquement à détecter des événements particuliers sur des canaux d'acquisition et à fournir des signaux de trigger correspondant aux modules, par l'intermédiaire du bus de synchronisation de l'invention.

La position des connecteurs 5 sur la face avant des modules 1, 2 permet de insérer et de retirer très facilement les éléments de connexion 3, sans devoir retirer les modules de leur slots. Il est ainsi possible de modifier très facilement la configuration et de supprimer la synchronisation externe de certains modules, et de vérifier ensuite visuellement la configuration choisie. Dans une variante, des indicateurs lumineux non représentés sur chaque module et/ou sur les éléments de connexion permettent en outre d'indiquer quel module occupe momentanément la fonction de maître d'horloge ou de maître de trigger.

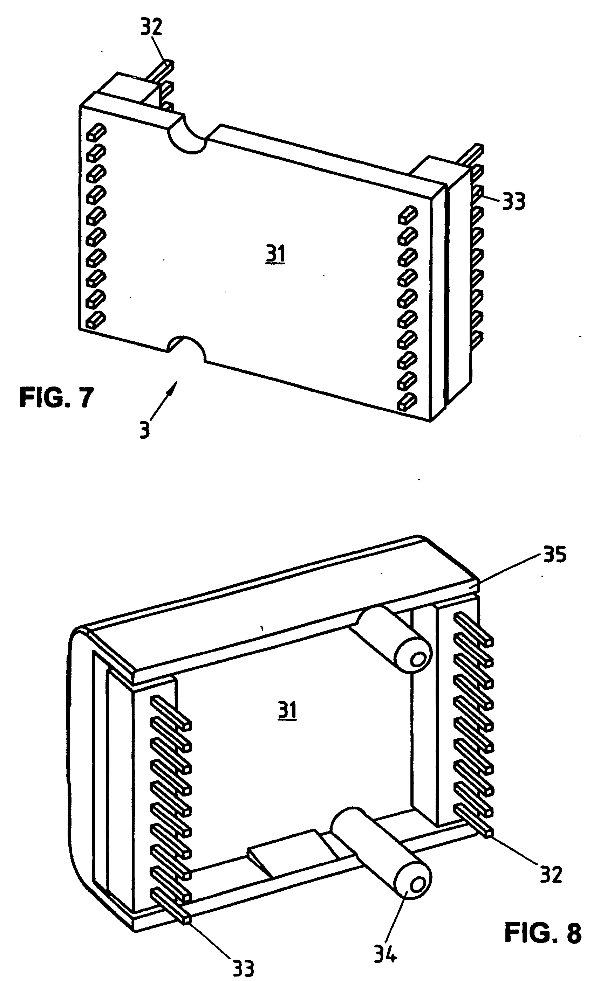

La figure 7 montre une représentation en perspective d'un élément de connexion 3 utilisé dans un système d'acquisition selon l'invention, dépourvu sur cette figure de son boîtier synthétique. L'élément de connexion comporte une première série de broches 32 destinée à être enfichée dans un premier module et une seconde série de broche 33 destinée à être enfichée dans un module adjacent. Les deux séries de broche sont reliées par une plaque de circuit imprimé (PCB) 31 comportant un certain nombre de pistes non représentées afin de relier les deux séries de broche entre elles ; différents composants électroniques passifs, par exemple des condensateurs, peuvent en outre être montés sur la plaque 31. Dans le cas d'un élément de connexion de terminaison, une résistance de terminaison peut en outre être soudée entre une et plusieurs broches 32 ou 33 et la terre. Dans ce cas, la plaque de PCB peut éventuellement occuper une surface plus grande que celle d'un élément de connexion 3 intermédiaire.

La figure 8 montre une représentation en perspective d'un élément de connexion 3 utilisé dans un système d'acquisition selon l'invention, muni d'un boîtier synthétique 35 clipsé sur la plaque PCB 31. Le boîtier synthétique 35 comporte un élément de détrompage constitué par deux portions en saillie 34 destinées à être enfichées dans des ouvertures correspondantes 111 (figure 6) sur le module correspondant, de façon à empêcher le retournement des éléments de connexion et une insertion dans le mauvais sens.

Dans le cas de modules d'acquisition occupant plus d'un slot, par exemple de modules dont l'épaisseur mobilise deux slots adjacents du système d'acquisition, on utilisera des éléments de connexion de longueur double (non représentés). De même, des éléments de connexion permettant de connecter des modules placés dans différents paniers peuvent également être imaginés dans le cadre de cette invention. Le déphasage plus important introduit par la propagation des signaux de synchronisation externe et de trigger sur ces éléments de connexion sera alors compensé par une programmation appropriée des retards dans les lignes à retard 206 sur les différents modules.

## Revendications

1. Module (1,2) d'acquisition de donnée pour système modulaire d'acquisition de données (4), comprenant :
des moyens de connexion (40) sur une première face permettant d'insérer le module de manière amovible dans un slot dudit système d'acquisition modulaire (4),
au moins un canal d'acquisition, chaque canal comportant au moins un convertisseur analogique-numérique (12) pour convertir un signal d'entrée analogique (IN1, IN2, IN3, IN4) en un signal numérique (OUT1, OUT2, OUT3, OUT4),
au moins un circuit de génération d'horloge (20) apte à fournir un signal d'horloge interne (208),
**caractérisé par** au moins un connecteur (5) permettant d'enficher un élément de connexion amovible (3) sur une deuxième face externe, distincte de ladite première face, dudit module (1) afin de connecter ledit module à un bus de synchronisation reliant plusieurs modules dans ledit système, ladite connexion étant effectuée de manière indépendante de l'insertion dudit module dans ledit slot,
et par un circuit de sélection d'horloge (204) permettant de sélectionner soit un état d'esclave-horloge, dans lequel lesdits convertisseurs (12) sont synchronisés par un signal de synchronisation externe (fₘₐₛₜₑᵣ) fourni par ledit bus de synchronisation, soit un état de maître-horloge, dans lequel lesdits convertisseurs sont synchronisés par ledit signal d'horloge interne qui est également utilisé comme signal de synchronisation externe sur ledit bus de synchronisation.

2. Module selon la revendication 1, **caractérisé en ce que** ledit circuit de génération d'horloge (20) comporte une boucle à verrouillage de phase (200), un signal de référence d'horloge (f_{ref}) étant appliqué à l'entrée de ladite boucle à verrouillage de phase,
et **en ce que** ledit signal d'horloge interne (208) est un signal en aval de ladite boucle à verrouillage de phase.

3. Module selon la revendication 1, **caractérisé par** un élément à retard (206) permettant de retarder le signal de synchronisation externe (fₘₐₛₜₑᵣ) reçu du bus de synchronisation.

4. Module selon la revendication précédente, **caractérisé en ce que** le retard appliqué par ledit élément à retard (206) est programmable.

5. Module selon l'une des revendications précédentes, **caractérisé en ce que** ledit connecteur (5) comporte une entrée de trigger permettant de transmettre au moins un signal de trigger entre modules adjacents (1,2).

6. Module selon la revendication précédente, **caractérisé par** au moins un circuit de génération de trigger (18) permettant de générer un signal de trigger en réponse à un événement prédéfini sur l'un des canaux d'acquisition.

7. Module selon la revendication précédente, **caractérisé par** un circuit de sélection de trigger permettant d'imposer sur ledit bus de synchronisation le signal de trigger fourni par ledit circuit de génération de trigger (18).

8. Module selon l'une des revendications précédentes, **caractérisé en ce que** ledit signal de synchronisation externe (fₘₐₛₜₑᵣ) peut être momentanément interrompu.

9. Module selon la revendication précédente, **caractérisé en ce que** ledit signal de synchronisation externe (fₘₐₛₜₑᵣ) peut être interrompu en fonction de l'état dudit signal de trigger.

10. Module selon l'une des revendications précédentes, **caractérisé en ce que** ledit circuit de sélection d'horloge (204) peut être contrôlé par des signaux appliqués sur lesdits moyens de connexion (40).

11. Module selon l'une des revendications 5 à 10, **caractérisé en ce que** ledit élément à retard (206) peut être contrôlé par des signaux appliqués sur lesdits moyens de connexion (40).

12. Module selon l'une des revendications 7 à 11, **caractérisé en ce que** ledit circuit de sélection de trigger peut être contrôlé par des signaux appliqués sur lesdits moyens de connexion (40).

13. Module selon l'une des revendications précédentes, **caractérisé en ce que** ledit connecteur (5) permet d'enficher simultanément deux éléments de connexion amovibles (3) permettant de transmettre ledit signal de synchronisation externe (fₘₐₛₜₑᵣ) et/ou ledit signal de trigger de ou vers deux modules adjacents (1,2) dans ledit système d'acquisition modulaire.

14. Module selon l'une des revendications précédentes, **caractérisé en ce qu'**au moins un canal d'acquisition comprend :
au moins un démultiplexeur (14) pour démultiplexer le signal fourni par ledit convertisseur analogique numérique (12),
au moins un élément de mémoire (16) pour mémoriser le signal démultiplexé fourni par ledit démultiplexeur (18),
et **en ce que** ledit circuit de génération de trigger (18) est relié à la sortie dudit démultiplexeur.

15. Module selon l'une des revendications précédentes, **caractérisé en ce qu'**il est conforme au standard PCI,
et **en ce que** ledit connecteur (5) est disposé sur ladite deuxième face à l'avant (11) dudit module (1, 2) accessible à l'utilisateur lorsque ledit module est monté dans ledit système d'acquisition modulaire (4).

16. Module selon l'une des revendications 1 à 14, **caractérisé en ce qu'**il est conforme au standard CompactPCI,
et **en ce que** ledit connecteur (5) est disposé sur ladite seconde face à l'avant (11) dudit module (1, 2) accessible à l'utilisateur lorsque ledit module est monté dans ledit système d'acquisition modulaire (4).

17. Module selon l'une des revendications 1 à 14, **caractérisé en ce qu'**il est conforme au standard PXI,
et **en ce que** ledit connecteur (5) est disposé sur ladite seconde face à l'avant (11) dudit module (1, 2) accessible à l'utilisateur lorsque ledit module est monté dans ledit système d'acquisition modulaire (4).

18. Module selon l'une des revendications 1 à 14, **caractérisé en ce qu'**il est conforme au standard VXI,
et **en ce que** ledit connecteur (5) est disposé sur ladite seconde face à l'avant (11) dudit module (1, 2) accessible à l'utilisateur lorsque ledit module est monté dans ledit système d'acquisition modulaire (4).

19. Module selon l'une des revendications précédentes, **caractérisé en ce que** ledit signal de synchronisation externe (fₘₐₛₜₑᵣ) est un signal différentiel.

20. Module selon l'une des revendications précédentes, **caractérisé en ce que** ledit signal de synchronisation externe (fₘₐₛₜₑᵣ) est un signal de type ECL.

21. Module selon l'une des revendications précédentes, **caractérisé en ce que** plusieurs signaux de synchronisation externe déphasés peuvent être transmis sur ledit bus.

22. Système modulaire d'acquisition de données, **caractérisé en ce qu'**il comprend
une pluralité de modules selon l'une des revendications 1 à 21 et que lesdits modules sont reliés deux par deux par des éléments de connexion comprenant chacun une première série de broches (32) enfichées dans un connecteur (5) sur ladite seconde face avant (11) d'un premier module d'acquisition et une seconde série de broches (33) enfichées dans un connecteur (5) sur ladite seconde face avant (11) d'un second module d'acquisition.

23. Système modulaire selon la revendication 22, comprenant en outre un module d'horloge pour fournir un signal de synchronisation externe à un ou plusieurs modules (1, 2) dans un système modulaire d'acquisition de données (4), ledit module d'horloge comprenant :
des moyens de connexion (40) permettant d'insérer le module d'horloge de manière amovible dans un slot dudit système d'acquisition modulaire (4),
au moins un circuit de génération d'horloge (20) apte à fournir un signal de synchronisation externe (fₘₐₛₜₑᵣ),
au moins un connecteur (5) permettant d'enficher un élément de connexion amovible (3) sur une desdites secondes faces externes (11) dudit module d'horloge afin de transmettre ledit signal de synchronisation externe (fₘₐₛₜₑᵣ) sur un bus reliant des modules adjacents (1, 2) dans ledit système d'acquisition modulaire (4).

24. Système modulaire selon l'une des revendications 22 ou 23, comprenant en outre un module de trigger pour fournir un signal de trigger à un ou plusieurs modules (1, 2) dans un système modulaire d'acquisition de données (4), ledit module de trigger comprenant :
des moyens de connexion (40) permettant d'insérer le module de trigger de manière amovible dans un slot dudit système d'acquisition modulaire (4),
un circuit de génération de trigger (18) permettant de générer un signal de trigger en réponse à un événement prédéfini sur un canal d'acquisition du système d'acquisition modulaire,
au moins un connecteur (5) permettant d'enficher un élément de connexion amovible (3) sur une desdites secondes faces externes (11) dudit module de trigger afin de transmettre un signal de trigger sur un bus reliant des modules adjacents (1, 2) dans ledit système d'acquisition modulaire (4).

25. Système modulaire selon la revendication précédente, **caractérisé en ce que** ledit connecteur (5) permet d'enficher simultanément deux éléments de connexion amovibles (3) permettant de transmettre ledit signal de trigger vers deux modules adjacents dans ledit système d'acquisition modulaire.

26. Système modulaire selon l'une des revendications 24 ou 25, **caractérisé en ce que** ledit module de trigger comporte un canal d'acquisition comprenant au moins :
un convertisseur analogique-numérique (12),
au moins un démultiplexeur (14) pour démultiplexer le signal fourni par ledit convertisseur analogique numérique,
au moins un élément de mémoire (16) pour mémoriser le signal démultiplexé fourni par ledit démultiplexeur (18),
et **en ce que** ledit circuit de génération de trigger (18) est relié à la sortie dudit démultiplexeur.

27. Système modulaire selon l'une des revendications 22 à 26, '**caractérisé en ce que** ledit élément de connexion amovible (3) comporte:
une plaque de circuit imprimé (31) comportant une pluralité de pistes permettant de connecter électriquement lesdites broches de la première série avec lesdites broches de la seconde série,
au moins une saillie (34) destinée à être enfichée dans un desdits modules d'acquisition (1, 2) de façon à empêcher le retournement dudit élément de connexion amovible.

28. Système modulaire selon la revendication précédente, **caractérisé en ce que** ledit élément de connexion comporte un boîtier (35) en matériau synthétique enrobant ladite plaque de circuit imprimé.

29. Système modulaire selon l'une des revendications 22 à 28, **caractérisé en ce qu'**il comporte au moins un élément de connexion muni d'au moins une impédance de terminaison (30) connectée électriquement entre une desdites broches (32) et un signal de terre, la valeur de ladite impédance de terminaison étant sensiblement égale à l'impédance de ligne du signal transitant par la broche considérée.

30. Système modulaire selon la revendication précédente, **caractérisé en ce que** la forme dudit élément de connexion (3', 3") muni d'au moins une impédance de terminaison ne permet pas de l'enficher entre deux autre éléments de connexion.

## Patentansprüche

1. Datenerfassungsmodul (1, 2), für modulares Datenerfassungssystem (4), umfassend:
Verbindungsmittel (40) auf einer ersten Seite, die es erlauben, das Modul in einem Slot des besagten modularen Datenerfassungssystems (4) herausziehbar einzufügen,
mindestens einen Erfassungskanal, wobei jeder Kanal mindestens einen analog-digital Konverter (12) umfasst, um ein analoges Eingangssignal (IN1, IN2, IN3, IN4) in ein digitales Signal (OUT1, OUT2, OUT3, OUT4) umzuwandeln,
mindestens einen Uhrgenerierungsschaltkreis (20), der dazu geeignet ist, ein internes Uhrsignal zu erzeugen (208),
**gekennzeichnet durch** mindestens ein Verbindungsstück (5) das erlaubt, ein herausziehbares Verbindungselement (3) auf eine zweite externe Seite, verschieden von besagter ersten Seite, des besagten Moduls (1) einzustecken, um besagtes Modul mit einem mehrere Module in besagtem System verbindenden Synchronisationsbus zu verbinden, wobei besagte Verbindung unabhängig von der Einführung des besagten Moduls in den besagten Slot erfolgt,
und **durch** einen Uhrselektionsschaltkreis (204), der es erlaubt, entweder einen Sklaven-Uhr-Zustand auszuwählen, in welchem besagte Konverter (12) **durch** ein externes, **durch** besagten Synchronisationsbus geliefertes Synchronisierungssignal(fₘₐₛₜₑᵣ) synchronisiert werden, oder einen Meister-Uhr-Zustand auszuwählen, in welchem die besagten Konverter **durch** besagtes internes Uhrsignal, das ebenfalls als externes Synchronisationssignal auf besagtem Synchronisationsbus benutzt wird, synchronisiert werden.

2. Modul gemäss Anspruch 1, **dadurch gekennzeichnet, dass** besagter Uhrgenerierungsschaltkreis (20) einen Phasenverriegelungsloop (200) umfasst, wobei ein Uhrreferenzsignal (f_{ref}) am Eingang des besagten Phasenverriegelungsloops angewandt wird,
und dass besagtes internes Uhrsignal (208) ein Signal flussabwärts von besagtem Phasenverriegelungsloop ist.

3. Modul gemäss Anspruch 1, **gekennzeichnet durch** ein Verzögerungselement (206) das erlaubt, das vom Synchronsiationsbus erhaltene externe Synchronisationssignal (fₘₐₛₜₑᵣ) zu verzögern.

4. Modul gemäss dem vorhergehenden Anspruch, **dadurch gekennzeichnet, dass** die von besagtem Verzögerungselement (206) angewandte Verzögerung programmierbar ist.

5. Modul gemäss einem der vorhergehenden Ansprüche, **dadurch gekennzeichnet, dass** besagtes Verbindungsstück (5) einen Triggerschaltungseingang beinhaltet, der es erlaubt, wenigstens ein Triggerschaltungssignal zwischen benachbarten Modulen (1, 2) zu übermitteln.

6. Modul gemäss dem vorhergehenden Anspruch, **gekennzeichnet durch** einen Triggererzeugungsschaltkreis (18), der es erlaubt, ein Triggersignal in Reaktion auf ein vordefiniertes Ereignis auf einem der Erfassungskanäle zu erzeugen.

7. Modul gemäss dem vorhergehenden Anspruch, **gekennzeichnet durch** einen Triggerauswahlschaltkreis der erlaubt, das **durch** besagten Triggererzeugungsschaltkreis (18) gelieferte Triggersignal auf den besagten Synchronisationsbus zuzuweisen.

8. Modul gemäss einem vorhergehenden Ansprüche, **dadurch gekennzeichnet, dass** besagtes externes Synchronisierungssignal(fₘₐₛₜₑᵣ) vorübergehend unterbrochen werden kann.

9. Modul gemäss dem vorhergehenden Anspruch, **dadurch gekennzeichnet, dass** besagtes externes Synchronisierungssignal(fₘₐₛₜₑᵣ) in Abhängigkeit vom Zustand des besagten Triggersignals unterbrochen werden kann.

10. Modul gemäss einem vorhergehenden Ansprüche, **dadurch gekennzeichnet, dass** besagter Uhrselektionsschaltkreis (204) durch auf besagten Verbindungsmittel (40) angewandte Signale kontrolliert werden kann.

11. Modul gemäss einem der Ansprüche 5 bis 10, **dadurch gekennzeichnet, dass** besagtes Verzögerungselement (206) durch auf besagten Verbindungsmittel (40) angewandte Signale kontrolliert werden kann.

12. Modul gemäss einem der Ansprüche 7 bis 11, **dadurch gekennzeichnet, dass** besagter Triggerauswahlschaltkreis durch auf besagten Verbindungsmittel (40) angewandte Signale kontrolliert werden kann.

13. Modul gemäss einem vorhergehenden Ansprüche, **dadurch gekennzeichnet, dass** besagtes Verbindungsstück (5) erlaubt, gleichzeitig zwei herausziehbare Verbindungselemente (3) einzustecken, welche die Übertragung des besagten externen - Synchronisierungssignals (fₘₐₛₜₑᵣ) und/oder des besagten Triggersignals an oder weg von zwei benachbarten Modulen (1, 2) in besagtem modularen Erfassungssystem erlauben.

14. Modul gemäss einem der vorhergehenden Ansprüche, **dadurch gekennzeichnet, dass** mindestens ein Erfassungskanal umfasst:
mindestens einen Demultiplexer (14), um das vom besagtem analog Konverter (12) gelieferte Signal zu demultiplexieren,
mindestens ein Speicherelement (16), um das vom besagtem Demultiplexer (18) gelieferte demultiplexierte Signal zu speichern,
und dass besagter Triggererzeugungsschaltkreis (18) mit dem Ausgang des besagten Demultiplexers verbunden ist.

15. Modul gemäss einem der vorhergehenden Ansprüche, **dadurch gekennzeichnet, dass** es dem PCI Standard entspricht
und dass besagtes Verbindungsstück (5) auf besagter zweiten Seite vorne (11) des besagten Moduls (1, 2) angebracht ist, welche dem Benutzer zugänglich ist, wenn besagtes Modul in besagtem modularen Erfassungssystem (4) montiert ist.

16. Modul gemäss einem der Ansprüche 1 bis 14, **dadurch gekennzeichnet, dass** es dem CompactPCI Standard entspricht
und dass besagtes Verbindungsstück (5) auf besagter zweiten Seite vorne (11) des besagten Moduls (1, 2) angebracht ist, welche dem Benutzer zugänglich ist, wenn besagtes Modul in besagtem modularen Erfassungssystem (4) montiert ist.

17. Modul gemäss einem der Ansprüche 1 bis 14, **dadurch gekennzeichnet, dass** es dem PXI Standard entspricht
und dass besagtes Verbindungsstück (5) auf besagter zweiten Seite vorne (11) des besagten Moduls (1, 2) angebracht ist, welche dem Benutzer zugänglich ist, wenn besagtes Modul in besagtem modularen Erfassungssystem (4) montiert ist.

18. Modul gemäss einem der Ansprüche 1 bis 14, **dadurch gekennzeichnet, dass** es dem VXI Standard entspricht
und dass besagtes Verbindungsstück (5) auf besagter zweiten Seite vorne (11) des besagten Moduls (1, 2) angebracht ist, welche dem Benutzer zugänglich ist, wenn besagtes Modul in besagtem modularen Erfassungssystem (4) montiert ist.

19. Modul gemäss einem der vorhergehenden Ansprüche, **dadurch gekennzeichnet, dass** das besagte externe Synchronisierungssignal(fₘₐₛₜₑᵣ) ein Differentialsignal ist.

20. Modul gemäss einem der vorhergehenden Ansprüche, **dadurch gekennzeichnet, dass** das besagte externe Synchronisierungssignal(fₘₐₛₜₑᵣ) ein ECL Signal ist.

21. Modul gemäss einem der vorhergehenden Ansprüche, **dadurch gekennzeichnet, dass** mehrere phasenverschobene externe Synchronisationssignale auf besagtem Bus übertragen werden können.

22. Modulares Erfassungssystem gemäss Anspruch 22, **dadurch gekennzeichnet, dass** es eine Vielzahl von Modulen gemäss einer der Ansprüche 1 bis 21 umfasst, und dass besagte Module zwei und zwei durch Verbindungsmittel verbunden sind, jedes beinhaltend eine erste Reihe von Stiften (32) in einem Verbindungsstück (5) auf besagter zweiten Seite vorne (11) eines ersten Erfassungsmoduls eingesteckt, und eine zweite Reihe von Stiften (33) in einem Verbindungsstück (5) auf besagter zweiten Seite vorne (11) eines zweiten Erfassungsmoduls eingesteckt.

23. Modulares Erfassungssystem gemäss Anspruch 22, ausserdem beinhaltend ein Uhrmodul, um ein externes Synchronisationssignal an eines oder mehrere Module (1, 2) in einem modularen Datenerfassungssystem (4) zu liefern, wobei besagtes Uhrmodul beinhaltet:
Verbindungsmittel (40), welche erlauben, das Uhrmodul in einen Slot des besagten modularen Erfassungssystems (4) herausziehbar einzufügen,
mindestens einen Uhrgenerierungsschaltkreis (20) dazu geeignet, ein externes Synchronisierungssignal(fₘₐₛₜₑᵣ) zu liefern,
mindestens ein Verbindungsstück (5) das erlaubt, ein herausziehbares Verbindungselement (3) auf eine der besagten zweiten externen Seiten (11) des besagten Uhrmoduls einzustecken, um besagtes externes Synchronisierungssignal(fₘₐₛₜₑᵣ) auf einen benachbarte Module (1, 2) in besagtem modularem Erfassungsmodul (4) verbindenden Bus zu übermitteln.

24. Modulares System gemäss einem der Ansprüche 22 oder 23, ausserdem umfassend ein Triggermodul, um ein Triggersignal an eines oder mehrere Module (1, 2) in einem modularen Datenerfassungsmodul (4) zu liefern, wobei besagtes Triggermodul umfasst:
Verbindungsmittel (40), die es erlauben, das Triggermodul in einen Slot des besagten modularen Erfassungsmoduls (4) herausziehbar einzufügen,
einen Triggererzeugungsschaltkreis (18), der es erlaubt, ein Triggersignal in Reaktion auf ein vordefiniertes Ereignis auf einem Erfassungskanal des modularen Erfassungssystems zu erzeugen,
mindestens ein Verbindungsstück (5), das erlaubt, ein herausziehbares Verbindungselement (3) auf eine der besagten zweiten externen Seiten (11) des besagten Triggermoduls einzustecken, um ein Triggersignal auf einen benachbarte Module (1, 2) in besagtem modularem Erfassungsmodul (4) verbindenden Bus zu übermitteln.

25. Modulares System gemäss dem vorhergehenden Anspruch, **dadurch gekennzeichnet, dass** besagtes Verbindungsstück (5) erlaubt, gleichzeitig zwei herausziehbare Verbindungselemente (3) einzustecken, was die Übermittlung des besagten Triggersignals an zwei benachbarte Modulen in besagtem modularen Erfassungssystem erlaubt.

26. Modulares System gemäss einem der Ansprüche 24 oder 25, **dadurch gekennzeichnet, dass** besagtes Triggermodul einen Erfassungskanal enthält, umfassend mindestens:
einen analog-digital Konverter (12),
mindestens einen Demultiplexer (14), um das vom besagtem analog-digital Konverter gelieferte Signal zu demultiplexieren,
mindestens ein Speicherelement (16), um das vom besagtem Demultiplexer (18) gelieferte demultiplexierte Signal zu speichern,
und dass besagter Triggererzeugungsschaltkreis (18) mit dem Ausgang des besagten Demultiplexers verbunden ist.

27. Modulares System gemäss einem der Ansprüche 22 bis 26, **dadurch gekennzeichnet, dass** besagtes herausziehbares Verbindungselement (3) umfasst:
eine Leiterbahnplatte (31), welche eine Vielzahl von Leiterbahnen umfasst, welche erlauben, besagte Stifte der ersten Reihe elektronisch mit den besagten Stiften der zweiten Reihe zu verbinden,
mindestens einen Vorsprung (34), dazu bestimmt, in eines der besagten Erfassungsmodule (1, 2) eingesteckt zu werden, um das Herumdrehen des besagten herausziehbaren Verbindungselements zu verhindern.

28. Modulares System gemäss dem vorhergehenden Anspruch, **dadurch gekennzeichnet, dass** besagtes Verbindungselement ein Gehäuse (35) aus synthetischem Material umfasst, welches besagte Leiterbahnplatte umgibt.

29. Modulares System gemäss einem der Ansprüche 22 bis 28, **dadurch gekennzeichnet, dass** es mindestens ein Verbindungselement umfasst, der mindestens eine zwischen einer der besagten Stifte (32) und einem Erdsignal elektrisch verbundene Abschlussimpedanz (30) aufweist, wobei der Wert besagter Abschlussimpedanz ungefähr mit der Impedanz der Linie des durch den Stift laufenden Signals gleich ist.

30. Modulares System gemäss einem der vorhergehenden Anspruchs, **dadurch gekennzeichnet, dass** die Form des besagten mit mindestens einer Abschlussimpedanz ausgestatteten Verbindungselements (3', 3") nicht erlaubt, es zwischen zwei anderen Verbindungselementen einzustecken.

## Claims

1. Data acquisition module (1, 2) for modular data acquisition system (4), comprising:
connecting means (40) on a first side for removably inserting the module in a slot of said modular acquisition system (4),
at least one acquisition channel, each channel comprising at least one analog-to-digital converter (12) for converting an analog input signal (IN1, IN2, IN3, IN4) into a digital signal (OUT1, OUT2, OUT3, OUT4),
at least one clock generating circuit (20) capable of supplying an internal clock signal (208),
**characterized by** at least one connector (5) making it possible to plug in a removable connecting element (3) on a second external side, different from the first side, of said module (1) in order to connect said module to a synchronization bus connecting several modules in said system, said connection being effected independently from the insertion of said module into said slot,
and by a clock selecting circuit (204) allowing the selection of either a slave-clock state, in which said converters (12) are synchronized by an external synchronization signal (fₘₐₛₜₑᵣ) supplied by said synchronization bus, or of a master-clock state in which said converters are synchronized by said internal clock signal that is also used as external synchronization signal on said synchronization bus.

2. Module according to claim 1, **characterized in that** said clock generating circuit (20) comprises a phase lock loop (200), a clock reference signal (f_{ref}) being applied at the input of said phase lock loop,
and **in that** said internal clock signal (208) is a signal downstream of said phase lock loop.

3. Module according to claim 1, **characterized by** a delay element (206) enabling the external synchronization signal (fₘₐₛₜₑᵣ) received from the synchronization bus to be delayed.

4. Module according to the preceding claim, **characterized in that** the delay applied by said delay element (206) can be programmed.

5. Module according to one of the preceding claims, **characterized in that** said connector (5) comprises a trigger input for transmitting at least one trigger signal between adjacent modules (1, 2).

6. Module according to the preceding claim, **characterized by** at least one trigger generating circuit (18) enabling a trigger signal to be generated in response to a predefined event on one of the acquisition channels.

7. Module according to the preceding claim, **characterized by** a trigger selecting circuit making it possible to impose on said synchronization bus the trigger signal supplied by said trigger generating circuit (18).

8. Module according to one of the preceding claims, **characterized in that** said external synchronization signal (fₘₐₛₜₑᵣ) can momentarily be interrupted.

9. Module according to the preceding claim, **characterized in that** said external synchronization signal (fₘₐₛₜₑᵣ) can be interrupted according to the state of said trigger signal.

10. Module according to one of the preceding claims, **characterized in that** said clock selecting circuit (204) can be controlled by signals applied on said connecting means (40).

11. Module according to one of the claims 5 to 10, **characterized in that** said delay element (206) can be controlled by signals applied on said connecting means (40).

12. Module according to one of the claims 7 to 11, **characterized in that** said trigger selecting circuit can be controlled by signals applied on said connecting means (40).

13. Module according to one of the preceding claims, **characterized in that** said connector (5) makes it possible to simultaneously plug in two removable connecting elements (3) enabling said external synchronization signal (fₘₐₛₜₑᵣ) and/or said trigger signal to be transmitted from or to two adjacent modules (1, 2) in said modular acquisition system.

14. Module according to one of the preceding claims, **characterized in that** at least one acquisition channels comprises:
at least a demultiplexer (14) for demultiplexing the signal supplied by said analog-to-digital converter (12),
at least a memory element (16) for storing the demultiplexed signal supplied by said demultiplexer (18),
and **in that** said trigger generating circuit (18) is connected at the output of the demultiplexer.

15. Module according to one of the preceding claims, **characterized in that** it conforms to the PCI standard,
and **in that** said connector (5) is placed on said second side on the front (11) of said module (1, 2) that can be accessed by the user when said module is mounted in said modular acquisition system (4).

16. Module according to one of the claims 1 to 14, **characterized in that** it conforms to the CompactPCl standard,
and **in that** said connector (5) is placed on said second side on the front (11) of said module (1, 2) that can be accessed by the user when said module is mounted in said modular acquisition system (4).

17. Module according to one of the claims 1 to 14, **characterized in that** it conforms to the PXI standard,
and **in that** said connector (5) is placed on said second side on the front (11) of said module that can be accessed by the user when said module is mounted in said modular acquisition system (4).

18. Module according to one of the claims 1 to 14, **characterized in that** it conforms to the VXI standard,
and **in that** said connector (5) is placed on said second side on the front (11) of said module (1, 2) that can be accessed by the user when said module is mounted in said modular acquisition system (4).

19. Module according to one of the preceding claims, **characterized in that** said external synchronization signal (fₘₐₛₜₑᵣ) is a differential signal.

20. Module according to one of the preceding claims, **characterized in that** said external synchronization signal (fₘₐₛₜₑᵣ) is a signal of the type ECL.

21. Module according to one of the preceding claims, **characterized in that** several phase-shifted external synchronization signals can be transmitted on said bus.

22. Modular data acquisition system, **characterized in that** it comprises
a plurality of modules according to one of the claims 1 to 21 and **in that** said modules are connected two by two by connecting elements comprising each a first series of pins (32) plugged in a connector (5) on said second front side (11) of a first acquisition module and a second series of pins (33) plugged in a connector (5) on said second front side (11) of a second acquisition module.

23. Modular system according to claim 22, further comprising a clock module for supplying an external synchronization signal to one or several modules (1, 2) in a modular data acquisition system (4), said clock module comprising:
connecting means (40) for removably inserting the clock module in a slot of said modular acquisition system (4),
at least one clock generating circuit (20) capable of supplying an external synchronization signal (fₘₐₛₜₑᵣ),
at least one connector (5) for plugging in a removable connecting element (3) on one of said second external sides (11) of said clock module in order to transmit said external synchronization signal (fₘₐₛₜₑᵣ) on a bus connecting adjacent modules (1, 2) in said modular acquisition system (4).

24. Modular system according to one of the claims 22 or 23, further comprising a trigger module for supplying a trigger signal to one or several modules (1, 2) in a modular data acquisition system (4), **characterized in that** said trigger module comprises:
connecting means (40) for removably inserting the trigger module in a slot of said modular acquisition system (4),
a trigger generating circuit (18) capable of generating a trigger signal in response to a predefined event on an acquisition channel of the modular acquisition system,
at least one connector (5) for plugging in a removable connecting element (3) on one of said second external sides (11) of said trigger module in order to transmit a trigger signal on a bus connecting adjacent modules (1, 2) in said modular acquisition system (4).

25. Modular system according to the preceding claim, **characterized in that** said connector (5) makes it possible to simultaneously plug in two removable connecting elements (3) enabling said trigger signal to be transmitted to two adjacent modules in said modular acquisition system.

26. Modular system according to one of the claims 24 or 25, **characterized in that** said trigger module comprises an acquisition channel comprising:
at least an analog-to-digital converter (12),
at least a demultiplexer (14) for demultiplexing the signal supplied by said analog-to-digital converter,
at least a memory element (16) for storing the demultiplexed signal supplied by said demultiplexer (18),
and **characterized in that** said trigger generating circuit (18) is connected at the output of said demultiplexer.

27. Modular system according to one of the claims 22 to 26, **characterized in that** said removable connecting element (3) comprises:
a printed circuit board (31) comprising a plurality of paths enabling said pins of the first series to be electrically connected with said pins of the second series,
at least a protrusion (34) designed to be plugged in one of said acquisition modules (1, 2) so as to prevent said removable connecting element from turning.

28. Modular system according to the preceding claim, **characterized in that** said connection element comprises a housing (35) of synthetic material encasing said printed circuit board.

29. Modular system according to one of the claims 22 to 28, **characterized in that** it comprises at least one connecting element provided with at least one terminating impedance (30) electrically connected between one of said pins (32) and an earth signal, the value of said terminating impedance being about equal to the line impedance of the signal traveling through the pin in question.

30. Modular system according to the preceding claim, **characterized in that** the shape of said connecting element (3', 3") provided with at least one terminating impedance does not allow it to be plugged in between two other connecting elements.
